# EUROPEAN PATENT APPLICATION

(11) **EP 0 562 468 A1**
(43) Date of publication of application: **29.09.1993**
(21) Application number: 93104496.0
(22) Date of filing: 18.03.1993
(51) Int. Cl.: H04N 1/44

(54) **Image forming apparatus with copy guard**

(30) Priority: 27.03.1992 JP 71732/92
(71) Applicant: KABUSHIKI KAISHA TOSHIBA, Kawasaki-shi, Kanagawa-ken 210 (JP)
(72) Inventor: Yamanishi, Eiichi, c/o Intellectual Property Div., Minato-ku, Tokyo 105 (JP)
(74) Representative: Henkel, Feiler, Hänzel & Partner

(57) **Abstract**

An image forming apparatus according to the present invention is able to reliably protect information, without taking a complicated procedure, and to acquire the information and make a copy thereof when the need arises. The image forming apparatus (2) includes a reading section (10) for converting an image recorded on a document into image data, a page memory (62) having memory areas capable of storing the image data for at least one page, an image forming section (20) for forming an image on a paper sheet based on the image data stored in the page memory, and a controller (50) for dividing the image data supplied from the reading section into a predetermined number of data sets, rearranging the data items, and storing the rearranged data sets in the corresponding areas of the page memory, and for, when image data corresponding to the data sets is read out from the page memory, restoring the image data to the original image data. Since the image data is rearranged based on a rearrangement condition stored in a ROM of the controller, it cannot be restored without using a restoration condition corresponding to the rearrangement condition.

## Description

The present invention relates to an image forming apparatus used in an electrophotographic mechanism and, more specifically, to a digital copying apparatus having an image reader for optically reading image information of an object to be copied, an image memory for storing image information supplied from an external device, as well as the image information read by the image reader, and a laser printer for outputting a copy image based on the image information stored in the image memory.

Various security methods have been devised for preventing information on documents or papers from leaking out through restricting the dissemination of the information.

One method is to use special paper for preventing a copy from being made. For example, processed paper wherein characters are embossed on a background when a copying operation is performed, or paper having a reflective underlayer from which a black copied image appears.

Another method is to read information which is to be prevented from leaking pixel by pixel, divide the information into a plurality of information items, rearrange the information items, and print them out.

However, the first method has a drawback wherein information on documents or papers cannot be copied for a meeting or the like. The second method has a drawback wherein the content of the original information cannot be confirmed unless a plurality of information items are restored to their original configuration. The second method often requires the use of complicated procedures and passwords in order to restore the information. Therefore, if the order of rearrangement is unclear, or an erroneous procedure is performed, or a different password is input, the information cannot easily be restored to its original form.

One method for rearranging a plurality of items of information is disclosed in Published Unexamined Japanese Patent Application (PUJPA) 3-85872. According to this publication, information to be stored is divided into information items in a relatively small number of areas (several rows x several columns), and the information items are rearranged every row or column. Using this' method, however, a condition of rearrangement has to be input whenever the information items are rearranged, and the condition has to be exactly input when the rearranged information items are restored to their original configuration. This can be a serious problem with storage of information in a restorable state or quick acquisition of stored information.

It is accordingly an object of the present invention to provide an image forming apparatus having a copy guard.

It is another object of the present invention to provide an image forming apparatus capable of reliably protecting information without requiring use of complicated procedures or passwords.

It is still another object of the present invention is to provide an image forming apparatus which allows a user to acquire protected information at once.

According to one aspect of the present invention, there is provided an image forming apparatus comprising:
means for reading air image as image data;
means for changing a configuration of the image data, in accordance with at least one of conditions which said changing means has to divide the image data into a member of units and to rearrange the units;
means for storing the conditions used in said changing means to change the configuration of the image data; and
means for selecting one of the conditions to change the configuration of the image data.

According to another aspect of the present invention, there is provided an image forming apparatus comprising:
means for reading image data as image information every set of pixels;
means for storing the image data read by said reading means including a plurality of storing areas;
first changing means for changing a configuration of the image data, said first changing means dividing the image data read by said reading means into image groups corresponding to the set of pixels using a predetermined division method, rearranging the image groups and storing image data corresponding to the rearranged image groups in said storing means;
second changing means for changing the configuration of the image data, said second changing means dividing the image data read by said reading means into image groups corresponding to the groups divided with said first changing means, complementaly, using a predetermined division method different from the method used in said first changing means, rearranging the image processing groups and storing image data corresponding to the rearranged image groups in said storing means;
means for forming an image on an image bearing member based on the image data stored in said storing means; and
means for selecting one of the first changing means and second changing means.

According to still another aspect of the present invention, there is provided an image forming apparatus comprising:
means for reading information of a document;
means for storing image data read by said reading means;
first changing means for changing a configuration of the image data, said first changing means dividing the image data read by said reading means into a plurality of sets using a predetermined division method and setting a rearrangement mode for changing an arrangement of the of sets to at least two different arrangements which are distinguishable from each other by codes proper to the arrangements;
second changing means for changing the configuration of the image data, said second changing means dividing the image data read by said reading means into a plurality of sets has same members corresponds to the sets of said first changing means using a predetermined restoration method, and setting a restoration mode for restoring the arrangement of the sets to an original arrangement of the image data corresponding to the image information of the document with respect to each of said at least two different arrangements obtained in the rearrangement mode;
means for forming an image on an image bearing member based on the image data; and
means for labeling the image formed by said forming means when the rearrangement mode is set.

This invention can be more fully understood from the following detailed description when taken in conjunction with the accompanying drawings, in which:
Fig. 1 is a schematic sectional view of an image forming apparatus (integrated plane paper copier) according to an embodiment of the present invention;
Fig. 2 is a schematic plan view of a console panel incorporated into the plane paper copier (PPC) shown in Fig. 1;
Fig. 3 is a schematic block diagram showing an electrical connection between units and components included in the PPC shown in Fig. 1;
Fig. 4 is a partially enlarged view of the block diagram shown in Fig. 3, showing a main control section;
Fig. 5 is a partially enlarged view of the block diagram shown in Fig. 3, showing a scanning unit section;
Fig. 6 is a partially enlarged view of the block diagram shown in Fig. 3, showing an image forming section;
Fig. 7 is a partially enlarged view of the block diagram shown in Fig. 3, showing a console panel section;
Figs. 8A and 8B are conceptual graphs showing a process of rearranging a plurality of images into which an original image is divided, according to another embodiment of the present invention;
Figs. 9A and 9B are conceptual graphs showing a process of restoring an image formed by the process shown in Figs. 8A and 8B to the original image;
Figs. 10A and 10B are conceptual graphs showing a process of rearranging a plurality of images into which an original image is divided, according to still another embodiment of the present invention; and
Fig. 11 is a conceptual graph view showing a modification to the image shown in Fig. 8B.

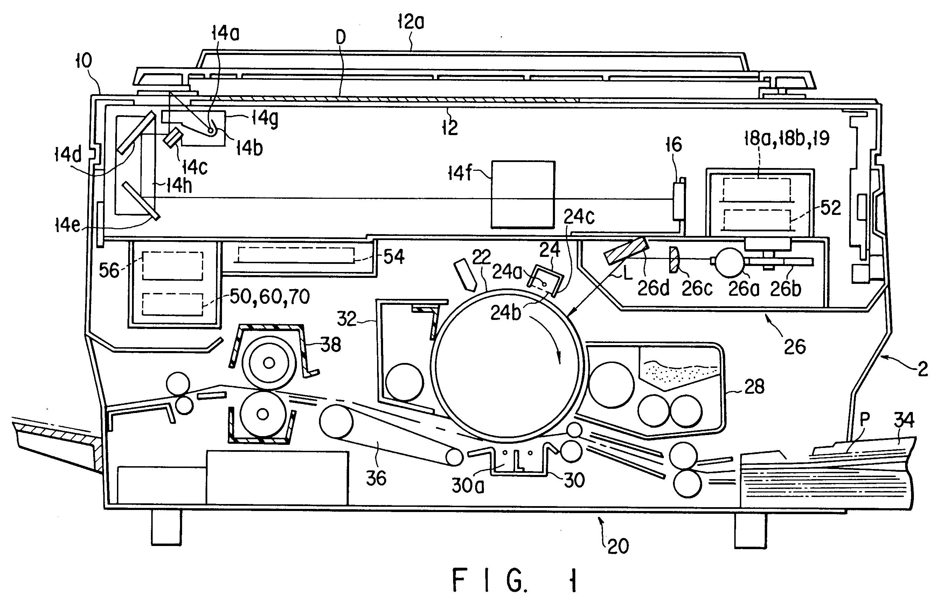

Fig. 1 is a schematic sectional view of an image forming apparatus according to an embodiment of the present invention.

An integrated plane paper copier (referred to as a PPC hereinafter) 2, which serves as an image forming apparatus, includes a reading section 10 for reading image information on a document (object) D to be protected, as dark and light information, and an image forming section 20 for forming an image on plane paper based on image data supplied from an external device, which will be described later.

The reading section 10 includes a document table 12 on which the document D is placed, an illuminating lamp 14a, which is extended along a leading edge of the document table 12, for illuminating the document D, and a CCD sensor 16 for photoelectrically converting light reflected from the document D illuminated by the lamp 14a into image data signals in a main scanning direction elongated in parallel with the CCD sensor 16. A reflector 14b for converging light rays from the illuminating lamp 14a on the document D is arranged around the lamp 14a. Furthermore, mirrors 14c, 14d and 14e for guiding the reflected light from the document D to the CCD sensor 16, and a converging lens 14f for converging the reflected light on the photoelectric conversion surface of the CCD sensor 16, are arranged between the converging lens 14f and the CCD sensor 16.

The illuminating lamp 14a, reflector 14b, and mirror 14c are integrally formed with a carriage 14g as one component, and the carriage 14g is moved by a stepping motor (not shown) along a sub-scanning direction perpendicular to the main scanning direction. The carriage 14g is moved at a speed defined based on a preset copying magnification. The mirrors 14d and 14e are arranged alongside the carriage 14g and fixed to a carriage 14h which can be moved by a belt (not shown) in accordance with the carriage 14g. The carriage 14h is moved at a half of the speed at which the carriage 14g is moved. The converging lens 14f, which can be moved by a driving mechanism (not shown) within a range including the principal ray of the reflected light going from the mirror 14 to the CCD sensor 16, determines a magnification for forming an image of the reflected light from the mirror 14e on a photoconductor drum 22 (described later) by the copying magnification, in accordance with its own movement.

A document pressing cover 12a for tightly putting the document D on the document table 12, is formed on the table 12 so that it can be opened and closed. The cover 12a is replaced with a semi-automatic document feeder (SDF), an automatic document feeder (ADF), or the like, in accordance with the copying speed of the PPC 2.

The image forming section 20 includes the photoconductor drum 22 which is cylindrical and can be rotated in a desired direction by a motor (not shown) or the like. A latent image is formed on the photoconductor drum 22 on the basis of information to be copied or printed out. A charging unit 24 for applying a desired potential to the drum 22, a laser oscillator unit 26 for emitting a laser beam, which is modulated based on image data to be copied or printed out, in response to an image signal or a print signal from an image processing section (described later), to the drum 22, a developing unit 28 for developing a toner image by supplying toner to the latent image formed on the photoconductor drum 22, and a transferring unit 30 for transferring the toner image developed by the developing unit 28 to a sheet of paper P supplied from a paper material supply section 34 (described later), are arranged in order around the photoconductor drum 22.

Further, a cleaning unit 32 for removing the toners remaining on the surface of the photoconductor drum 22 and removing the charges remaining on the drum 22, is arranged around the drum 22 and after the transferring unit 30 in the rotating direction of the drum 22.

The paper material supply section 34 for supplying the sheet of paper P, to which the toner image formed on the drum 22 is transferred, to the transferring unit 30, is arranged between the developing unit 28 and the transferring unit 30. A fixing unit 38 for fixing the toner image (toner) on the sheet of paper P is arranged opposite to the paper material supply section 34, while the transferring unit 30 is interposed between them. A conveyer unit 36 for conveying the sheet of paper P to the fixing unit 38 is arranged between the fixing unit 38 and the transferring unit 30.

The charging unit 24 has a corona wire 24a for applying desired charges to the photoconductor drum 22, a grid screen 24b for regulating the amount of charges reaching to the surface of the drum 22 from the corona wire 24a, and a shield housing 24c for preventing the charges from being applied to anything except the drum 22.

The developing unit 28 has a developing roller 28a having a conductive layer arranged opposite to the photoconductor drum 22 and is used to develop the latent image.

A separating charger unit (AC voltage supplier) 30a for separating the paper P to which the toner image is transferred from the photoconductor drum 22, from the drum 22, is incorporated into the transferring unit 30.

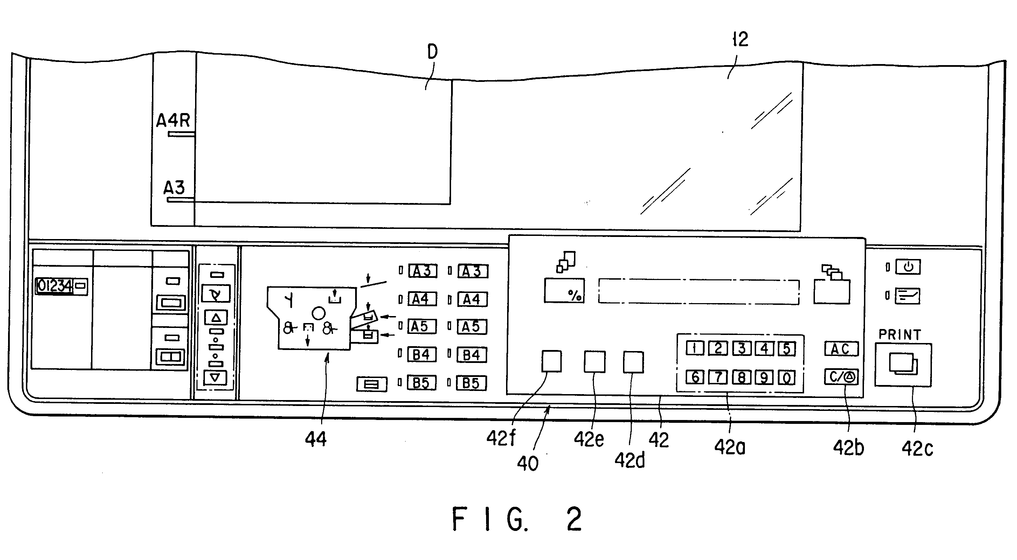

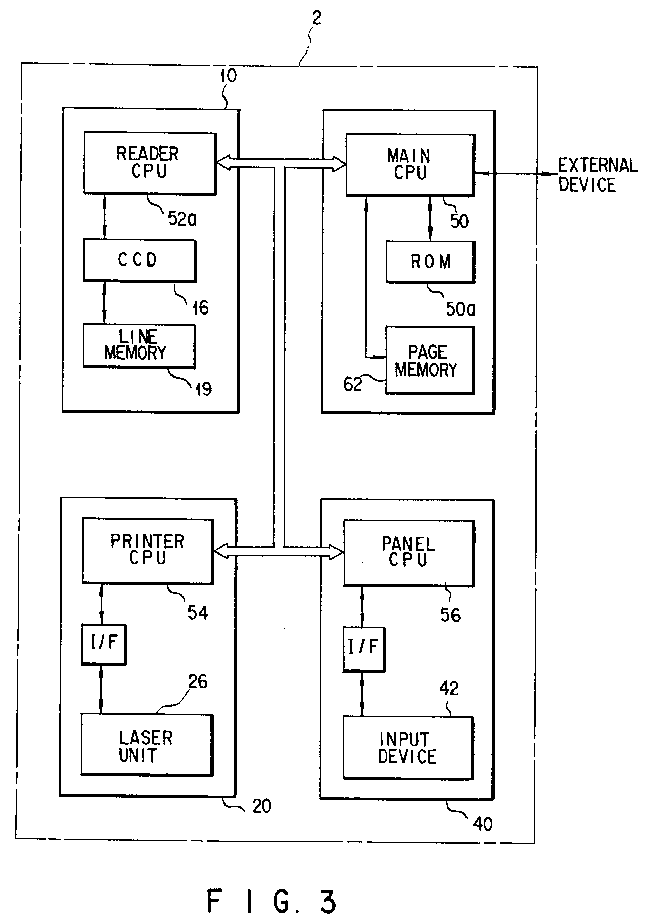

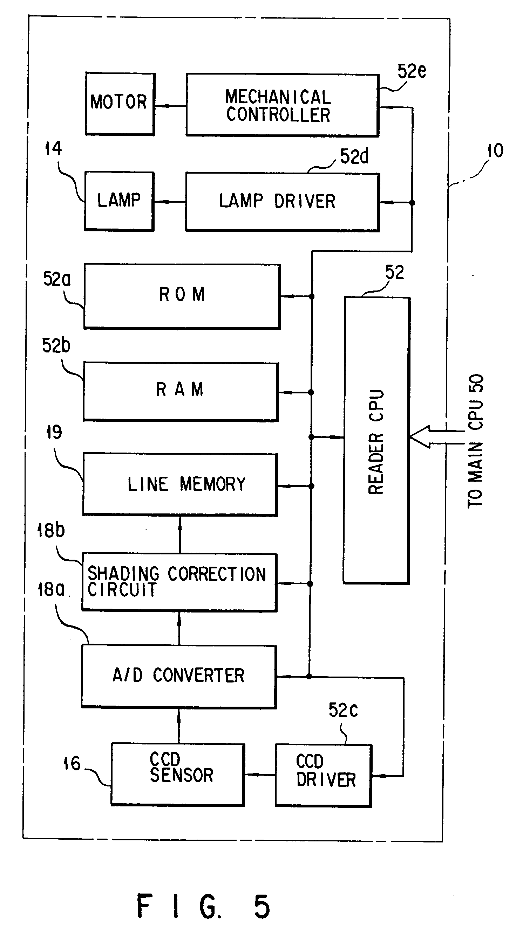

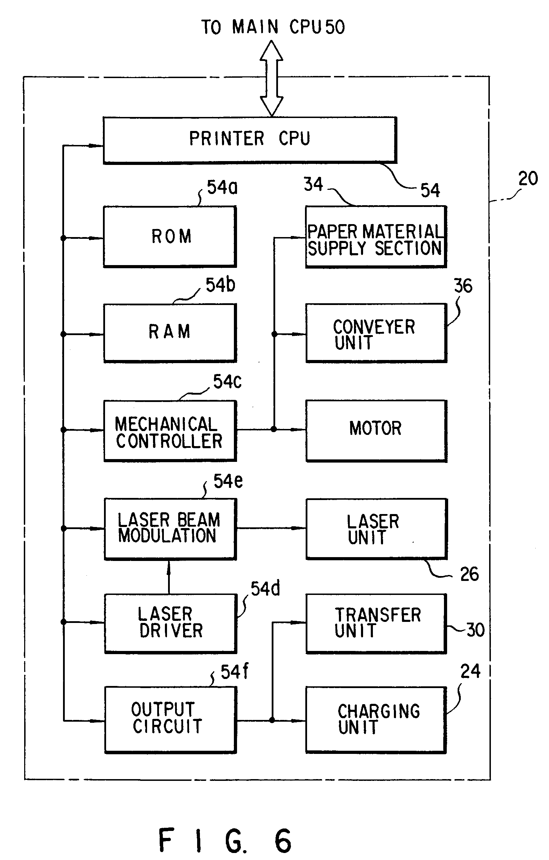

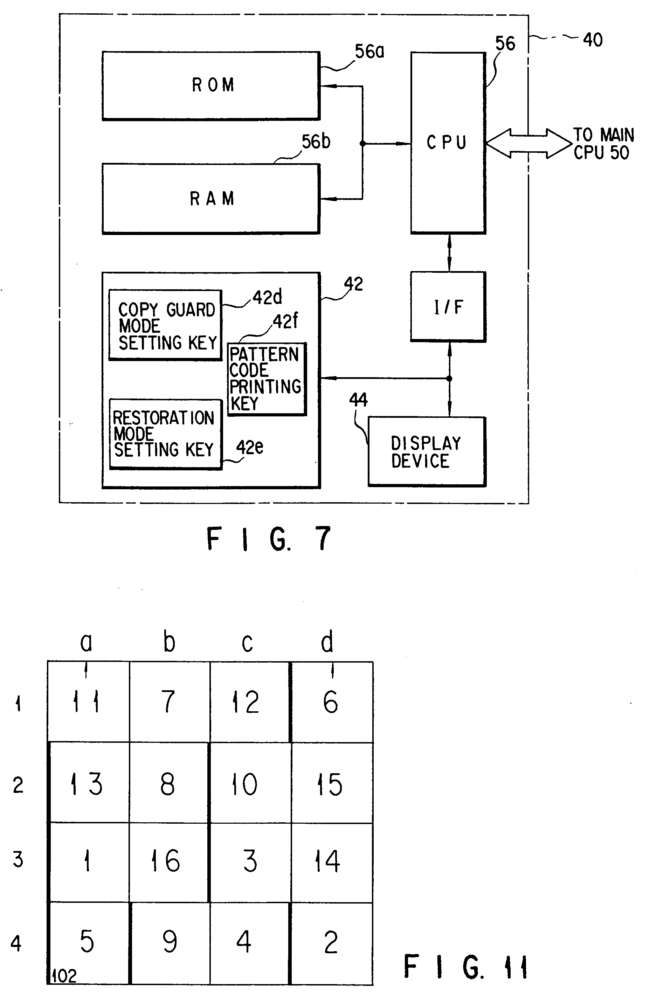

The PPC 2 includes a console panel 40 shown in Fig. 2, and a main control section 50 and an interface controller 70, shown in Figs. 3 to 7, for use in a connection with auxiliary units, as well as the units and components described above.

Fig. 2 is a schematic plan view of the console panel 40 incorporated into the top cover of the PPC shown in Fig. 1. The console panel 40 is formed in either the reading section 10 or the image forming section 20, and includes an input board 42 for inputting a copying volume (the number of copies), a magnification, a copy guard (described later) for keeping a security for the document D and setting/releasing a rearrangement mode. Further, the console panel 40 also includes a display panel 44 for indicating an operating state of the PPC 2 such as a jam of the paper P.

The input board 42 is used to input data such as the copying volume and the magnification, set/release the rearrangement mode and processing mode, start a printing operation, and output the input data, print start signal, etc. to the main control section 50, memory units (described later), and the like. The input board 42 includes keys representing symbols, numerals, character strings, etc. or transparent touch sensor switches 42a to 42f on a color CRT, in view of the procedure in operating the PPC 2 or the data (conditions) to be input.

The input board 42 is capable of inputting numerals of 0 to 9, and includes numeral keys 42a for inputting the number of copies, a magnification, or a pattern code used in the rearrangement mode (described later), a clear key 42b for restoring the conditions input by the numeral keys 42a to "0", a print key 42c for outputting a print start signal, a copy guard mode setting key 42d for setting/releasing the rearrangement mode, a restoration mode setting key 42e for setting a restoration mode for restoring an image formed in the rearrangement mode to its original, and a pattern code printing key 42f for printing a pattern code when the rearrangement mode is set.

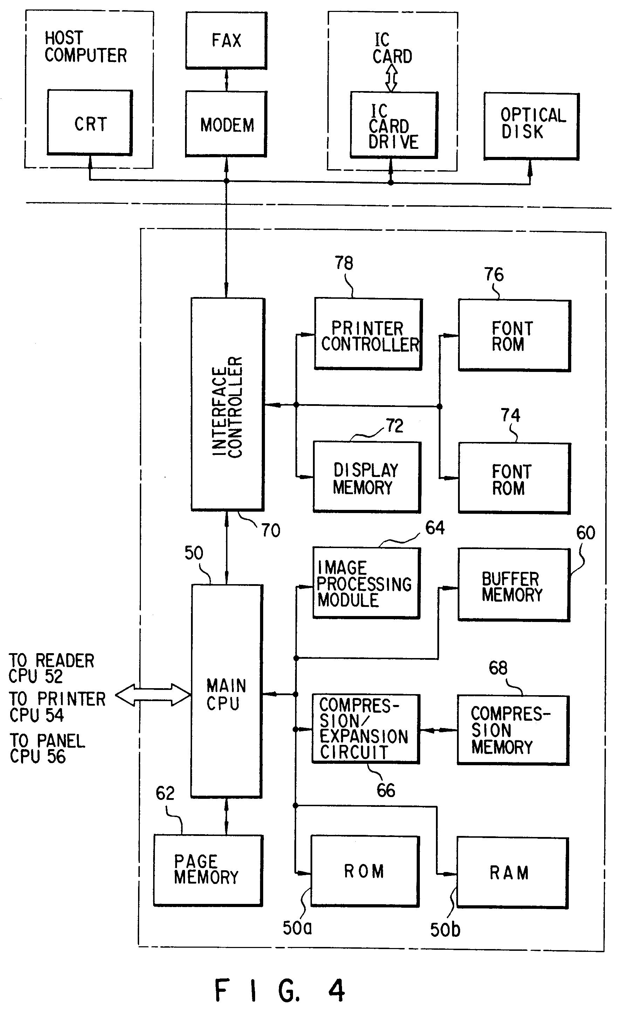

Fig. 3 schematically shows an electrical connection between the units and components included in the PPC 2 shown in Fig. 1 and a flow of signals for controlling them. Figs. 4 to 7 show an electrical connection between the CPU 50 and a reader unit CPU 52, a printer CPU 54, and a panel CPU 56, and a flow of signals for controlling them.

According to Fig. 3, the main CPU (main control section) 50 of the PPC 2 is connected to the reading section 10, image forming section 20, and console panel 40 or connected to the reader unit CPU 52, printer CPU 54, and panel CPU 56 to interlock these CPUs with the main CPU.

A main ROM 50a for storing data of a predetermined operation and a main RAM 50b for storing data defined by the ROM 50a and CPU 50, are connected to the CPU 50.

The ROM 50a stores a rearrangement (formation scrambling) condition used in the rearrangement mode for keeping a security (or a procedure for changing an arrangement of data) and a restoration condition for restoring the arrangement of data (or a procedure for restoring the arrangement of data to the state antedating the rearrangement). The rearrangement and restoration modes inhibit a copied image or an output image from being copied uselessly, and make it impossible to make the second, third, and n-th copies by means of a copying machine other than a copying machine used for the first copy or a copying machine other than a copying machine involved in a prescribed group.

The image copied based on the rearrangement condition, can be restored only by the copying machine used for obtaining the copied image. At least two rearrangement conditions are secured in order to keep a security, and a pattern code is predetermined on the basis of each of the rearrangement. The rearrangement mode and restoration mode are set by the copy guard mode setting key 42d and restoration mode key 42e, respectively. The pattern codes corresponding to the rearrangement conditions are easily confirmed by the pattern code printing key 42f.

Furthermore, a classifying and buffering memory 60, a page memory 62, an image processing module 64, a data compression/expansion circuit 66, a compression memory 68, and the like are connected to the main CPU 50.

The classifying and buffering memory 60 supplies information (image data) read by the reading section 10 to any of an auxiliary unit (not shown), compression memory 68, and image forming section 20 in response to an instruction of the main CPU 50, and temporarily stores it.

The page memory 62 includes a memory area capable of storing image data corresponding to a plurality of pages and is able to store image data from the reading section 10 for each of the pages. The memory area of the page memory 62 can be divided, for every page, into a plurality of areas defined by prescribed row and column addresses or a plurality of line areas defined by only the row addresses. The area of the page memory 62 includes first and second memory areas for the rearrangement and restoration modes and a pair of rearrangement memory areas capable of storing image data corresponding to at least two pages. The first and second memory areas are able to store their respective data. For example, the first memory area stores image data (original image data) read by the reading section 10, and the second memory area stores image data rearranged in the rearrangement mode.

The interface controller 70 includes interfaces for connecting the PPC 2 with an auxiliary system such as a facsimile and a host computer (not shown) having a CRT display and a raster printer. A display data memory 72 for temporarily storing image data to be displayed on the CRT display, a display font ROM 74 for storing a font used for converting the data stored in the memory 72 into a display signal, a printing font ROM 76 for storing printing data supplied from the host computer and numerals or symbols input therefrom, a printer controller 78 for converting binary data supplied from-the host computer into image data which can be printed out by the image forming section 20, and the like are connected to the interface controller 70.

An operation of the integrated PPC 2 will now be described.

The PPC 2 serves as a digital PPC, an image reader, and a printer. One operation of the digital PPC will be described hereinafter.

When a main switch (not shown) is turned on, a drive motor and a developing motor (neither of which is shown) is powered to rotate the photoconductor drum 22 and the developing roller 26a of the developing unit 26. At the same time, a desired charge is supplied from the charging unit 24 to the photoconductor drum 22. The drum is thus aged to define a copying state.

A document D is placed on the document table 12, and a copying condition is input by the input board 42 of the console panel 40. For example, the copying volume N is set to 5 and the magnification power is set to 100% by the numeral keys 42a of the console panel 40 controlled by the panel CPU 56. When the print key 42c is turned on, image data is read out from the document D.

More specifically, when the illuminating lamp 14a is turned on by a lamp driver 52d and the motor (not shown) is rotated by a mechanical controller 52e, the lamp 14a, reflector 14b, and mirror 14c are moved along the table 12 (together with the first carriage 14g) at a speed corresponding to the magnification power of 100%. The light (image data) reflected by the document D enters the CCD sensor 16, as the first carriage 14g moves.

The reflected light guided to the CCD sensor 16 is converted into an analog signal by the CCD sensor 16, which is being energized by the CCD driver 52c, for every pixel based on the resolution of the CCD sensor 16. This analog signal is converted into a digital signal by an A/D converter 18a. A variation of a threshold voltage superimposed upon the output of the CCD sensor 16, which is caused by a deviation proper to the CCD sensor 16 or a variation in environmental temperature, is eliminated from the digital signal by a correction circuit 18b. The digital signal is temporarily stored in a line memory 19, and then transferred to a classifying and buffering memory 60 and a page memory 62 at regular timing.

The image data (digital signal) stored in the line memory 19 is transferred to the classifying and buffering memory 60 at the regular timing in accordance with an instruction from the main CPU 50, and the image data is stored in unit of pixel in the page memory 62 for every page.

The image data is read out from the page memory 62 and supplied to an image processing module 64 in accordance with the instruction from the CPU 50. In the image processing module 64, the image data is separated into a luminance signal, a color-difference signal, etc. and then converted into a printing signal by filtering, trimming, masking, mirror version, inversion, edge emphasis, character specifying, and the like.

The printing signal is supplied to a laser beam modulation circuit 54e and a laser driver 54d via the printer CPU for every pixel. The printing signal continuously turns on/off the semiconductor laser 26a and modulates a laser beam emitted therefrom in accordance with the presence/absence of image data.

In the image forming section 20, when the print key 42c is turned on, the motor (not shown) is energized in accordance with an instruction from the CPU 50 to rotate the photoconductor drum 22. At the same time, a desired charge is applied to the drum 22 from the charging unit 24 energized by an output circuit 54f. Moreover, a solenoid or a clutch (not shown) is energized by a mechanical controller 54e to feed a sheet of paper P from the paper material supply section 34.

The laser beam modulated based on the image data is emitted to the surface of the photoconductor drum 22 to form an electrostatic latent image thereon. The electrostatic latent image is visualized by the toner supplied from the developing roller 28e of the developing unit 28 and transferred to the paper P by the transfer unit 30. The toner image transferred to the paper P is conveyed to the fixing unit 38 by the conveyer unit 36, fixed to the paper P, and stocked in a stocker member located outside the PPC 2. There have recently been a great demand for the

above-described image forming apparatus capable of keeping a security for information (copied images). The integrated PPC 2 of the apparatus incorporates a rearrangement mode for changing an arrangement of an image (data) of the document D read by the reading section 10 so as to prevent a user from understanding what the image represents, and then copying the image. More specifically, when image data of the document D placed on the document table 12 is copied, the guard mode setting key 42d of the console panel 40 is turned on. Thus the rearrangement mode is set to form a copied image whose arrangement has been changed or which is not able to read output information.

When the copy guard mode setting key 42d is turned on, the image data is transferred to the page memory 62 via the classifying and buffering memory 60, and rearranged therein for every pixel prescribed in accordance with the resolution of the CCD sensor 16, based on the rearrangement conditions stored in the main ROM 50a.

More specifically, the image data output from the classifying and buffering memory 60 is transmitted to the first area of memory areas included in the page memory 62 for the rearrangement, that is, memory areas secured in advance for the rearrangement and restoration modes.

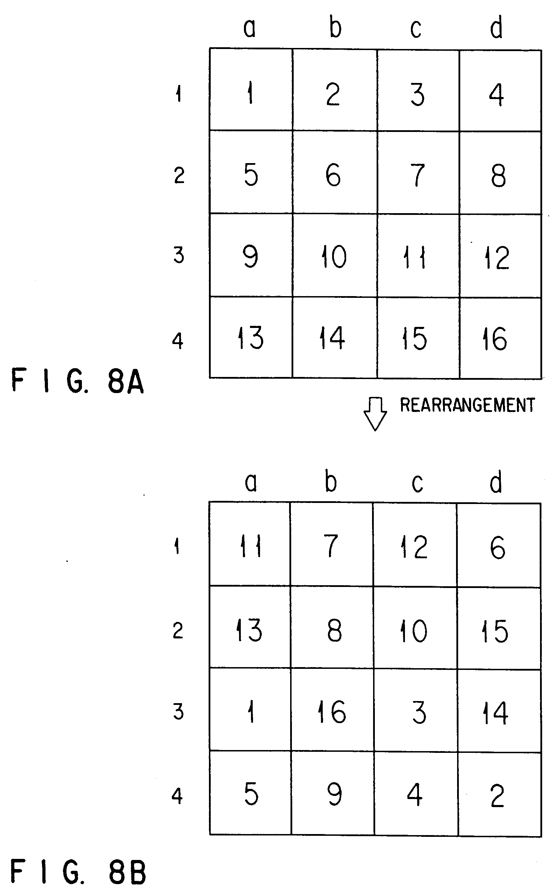

As shown in Fig. 8A, the first area is previously divided into 16 areas having rows 1 to 4 and columns a to d. The image data stored in the first area is transferred to the second area of the memory areas included in the page memory 62 based on the conditions stored in the main ROM 50a so that the areas are arranged as shown in Fig. 8B.

According to Figs. 8A and 8B, for example, an area 1 defined by (1, a) in Fig. 8A is moved to an area defined by (3, a) in Fig. 8B, and an area 2 defined by (2, a) is moved to an area defined by (4, d) in Fig. 8B.

In order to change the first area to the second area, a rearrangement code such as a rearrangement condition "101" is added to the first area and stored in the main ROM 50a. The second area is therefore restored only by a restoration condition corresponding to the rearrangement condition "101." The rearrangement code can be stored in, for example, an IC card (not shown) distributed to a specified user who can see a secret document. If an external memory medium such as the IC card is utilized, an IC card driver is connected to it through the interface controller 70.

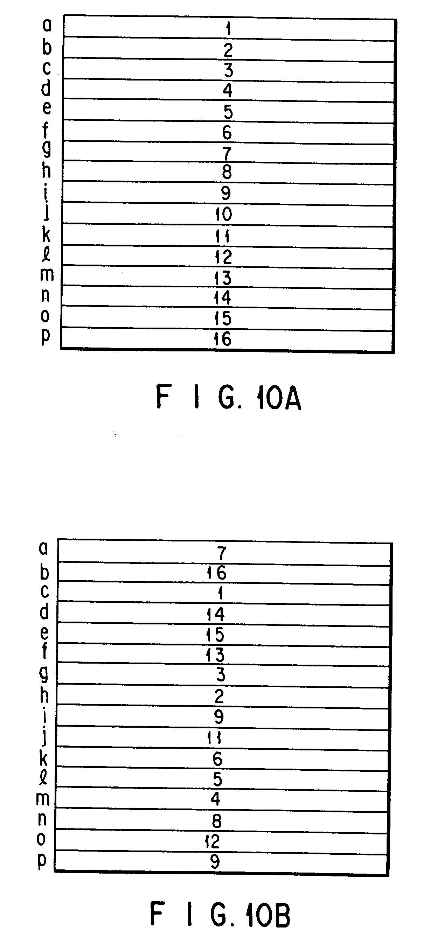

Figs. 8A and 8B show a case where one page of the page memory 62 is divided into 16 areas as the rearrangement condition "101." However, as shown in Figs. 10A and 10B, data read by CCD sensor 16 at a time can be stored as one unit in the page memory 62.

The image data rearranged in the page memory 62 is supplied to the image processing module 64 in response to an instruction from the CPU 50. In the image processing module, the image data is separated into a luminance signal, a color-difference signal, etc. and then converted into a printing signal by filtering, trimming, masking, mirror version, inversion, edge emphasis, character specifying, and the like.

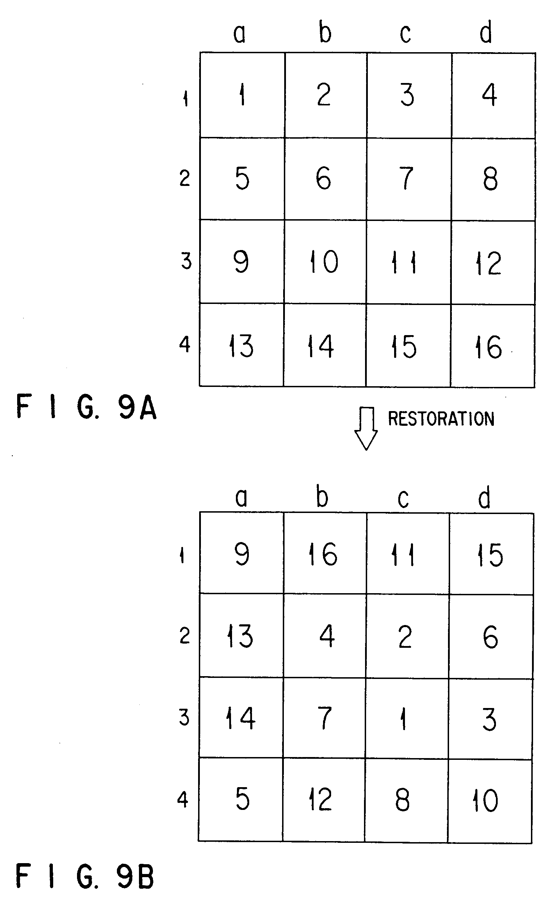

When the printing signal is output, the image forming section 20 is energized, and a rearranged image whose areas are arranged as shown in Fig. 9B and which is impossible to distinguish.

The rearranged image shown in Fig. 8B is restored only by the PPC 2 used for the rearrangement or an image forming apparatus having a restoration condition corresponding to the rearrangement condition.

When the rearranged image is restored to the original image, the restoration mode key 42e of the console panel 40 is turned on to set the restoration mode for restoring the rearranged image. When the rearranged image is formed on the document table 12 of the PPC and the print key 42c is turned on, the lamp 14a is energized to illuminate the rearranged image, thereby reading data of the rearranged image, as the normal copying operation described above.

The light reflected by the rearranged image is converted by the CCD sensor 16 into image data for every pixel, the image data is converted into a digital signal by the A/D converter 18a and the correction circuit 18b, and the digital signal is stored in the line memory 19.

The (digitized) image data stored in the line memory 19 is transferred to the classifying and buffering memory 60 in response to an instruction from the CPU 50 and then stored in the page memory 62 for every data corresponding to one page.

The image data transferred from the classifying and buffering memory 60 to the page memory 62, is stored in the second area of a pair of areas for the rearrangement and restoration, as shown in Fig. 9A. Since the 16 areas of the rearranged image shown in Fig. 8B are renumbered as shown in Fig. 9A, the arrangement of 16 areas shown in Fig. 9A is virtually equal to that of the 16 areas shown in Fig. 8B. For example, the area "1" of Fig. 9A corresponds to the area "11" of Fig. 8B.

The 16 items of the image data stored in the second area are transmitted in sequence to the first area of the pair of areas and arranged as shown in Fig. 9B.

More specifically, in order to restore the arrangement shown in Fig. 9A to its original as shown in Fig. 9B, an area 1 defined by (1, a) of Fig. 9A is moved to an area defined by (3, c) of Fig. 9B, an area 2 defined by (1, b) of Fig. 9A is moved to an area defined by (2, c) of Fig. 9B, and the following are moved in the same way.

Since the arrangement shown in Fig. 9B is obtained by restoring the arrangement shown in Fig. 9A, it is substantially the same as the arrangement shown in Fig. 8A. Therefore, the image formed by the arrangement shown in Fig. 9B is substantially the same as the original image formed on the document D. In other words, when image data is transferred to the second area of a pair of memory areas, it is rearranged in order opposite to a change in the arrangement of the image data shown in Fig. 8A to that of the image data shown in Fig. 8B, so that the original image on the document D is obtained.

If two or more rearrangement conditions are preset and a rearranged image is restored, it may be unclear which of the conditions is used to obtain the rearranged image. Though, in this case, the original image can be formed by making a new copy based on all the restoration conditions, if several hundreds to several ten thousands rearrangement conditions are prepared, the rearranged image cannot be restored to the original image. To resolve this problem, the PPC 2 includes a mode for printing out the rearrangement conditions.

Fig. 11 shows a rearrangement code indicative of which condition is used to obtain a rearranged image, which is printed on a memory area.

A pair of restoration conditions is prepared so as to correspond to the rearrangement conditions. For example, the restoration condition "101" corresponding to the rearrangement condition "101" and the restoration condition "102" corresponding to the rearrangement condition "102" are stored in advance in the main ROM 50a. Needless to say, these restoration conditions can be stored in an external memory medium such as an IC card (not shown) when the need arises.

If the rearrangement condition "102" is the rearrangement code shown in Fig. 11, it can be easily distinguished from the rearrangement condition "101." More specifically, when the copy guard mode setting key 42d is turned on and the pattern code printing key 42f is also turned on in the rearrangement mode, a rearrangement code such as "102" is printed on part of a printout image. This rearrangement code is input from the console panel 40 or the external host computer, converted into image data by the printing font ROM 76, and stored in the page memory 62, together with image data therein. Even though a plurality of rearrangement conditions are prepared, the original image can exactly be obtained.

When the rearrangement code is printed out, an arrow representing a direction in which the document D is placed in the rearrangement mode, a reference line serving as a marker for correcting a position of the document D, and the like can be printed out at the same time (see Fig. 11).

An operation of the integrated PPC 2, which serves as an apparatus other than a copying apparatus, will be described in brief.

If the PPC 2 is used as an image reading device, both the reading portion 10 and the CPU 50 are energized. Image information of the document D placed on the table 12 is converted into image data through the CCD sensor 16, A/D converter 18a, and correction circuit 18b, and stored in the line memory 19. The image data is then transferred from the line memory 19 to the classifying and buffering memory 60 under the control of the CPU 50 and stored in the page memory 62 as data for one page. The image data is transferred from the page memory 62 to a desired external device such as a host computer and an optical disk apparatus or a hard disk through the interface controller 70.

If the PPC 2 is used as a printing apparatus, the CPU 50 is connected to a device for sending image data to be printed through the interface controller 70 and an interface (not shown). For example, when image data is supplied from the host computer, it is converted into data which is storable in the page memory 62 by the printing font ROM 76, and stored in the page memory 62 via the classifying and buffering memory 60. The data stored in the page memory 62 is supplied to the image forming section 20 and printed out by the predetermined number and at a predetermined size. Needless to say, when the copy guard mode setting key 42d is turned on, the rearrangement mode is set to print out the rearranged image.

If the PPC 2 is used as a facsimile apparatus, the reading section 10 and the CPU 50 are energized with each other when image data is transmitted, and the CPU 50 and the image forming section 20 are energized with each other when image data is received.

The transmission of image data is performed as follows. The image data stored in the line memory 19 by the reading section 10 is transferred to the image processing module 64 in response to an instruction of the CPU 50. After the image data is processed by the module 64, it is compressed by the compression/expansion circuit 66 and transferred to the compression memory 68, and transferred to the compression memory 68. The compressed data transferred to the compression memory 68 is sent out via the interface controller 70 and a facsimile adapter (not shown). When a rearrangement mode is incorporated into a facsimile of the destination, the rearranged image can be transmitted as a document D, thus maintaining a security.

The reception of image data is performed as follows. The image data transmitted through a telephone circuit or an ISDN net, is received by the PPC 2 via a facsimile adapter (not shown) and stored in the compression memory 68. This image data is transferred to the compression/expansion circuit 66 and expanded as the original image data. After that, it passes through the classifying and buffering memory 60 and is stored in the page memory 62. The image data is then supplied from the page memory 62 to the image forming section 20 and printed out. It should be noted that, when externally-supplied image data is rearranged based on a rearrangement condition, the image data is protected during its transmission and a restored image can be output in response to an instruction of a restoration condition corresponding to the rearrangement condition from the CPU 50.

As described above, according to the present invention, image data of document D to be copied or externally-supplied image data is divided into a plurality of data items, they are rearranged. If an image of the rearranged data items is printed out, it is unclear what the image is. Thus, the security of the image data can be maintained.

Since at least two rearrangement conditions are provided, only the user who knows a restoration condition corresponding to one of the rearrangement conditions is able to restore a rearranged image to its original. Even though there are two or more rearrangement conditions, a rearrangement condition can be displayed on the rearranged image when the need arises; therefore, a restoration condition for restoring the rearranged image can be easily and reliably maintained.

## Claims

1. An image forming apparatus (2) characterized by comprising:
means (10) for reading air image as image data;
means (50) for changing a configuration of the image data, in accordance with at least one of conditions which said changing means has to divide the image data into a member of units and to rearrange the units;
means (62) for storing the conditions used in said changing means to change the configuration of the image data; and
means (42) for selecting one of the conditions to change the configuration of the image data.

2. The apparatus according to claim 1, characterized in that the conditions for changing the configuration of the image data respectively are coupled with restoring conditions for restoring the configuration of the image data.

3. The apparatus according to claim, 1, characterized in that said storing means (62) includes a memory card which is detachably connected therein.

4. The apparatus according to claim 1, characterized by comprising:
means (50) for labeling the condition to distinguish those that are used to change the configuration of the image data from those that are unused yet.

5. An image forming apparatus (2) characterized by comprising:
means (10) for reading image data as image information every set of pixels;
means (62) for storing the image data read by said reading means including a plurality of storing areas;
first changing means (50) for changing a configuration of the image data, said first changing means dividing the image data read by said reading means into image groups corresponding to the set of pixels using a predetermined division method, rearranging the image groups and storing image data corresponding to the rearranged image groups in said storing means;
second changing means (50) for changing the configuration of the image data, said second changing means dividing the image data read by said reading means into image groups corresponding to the groups divided with said first changing means, complementaly, using a predetermined division method different from the method used in said first changing means, rearranging the image processing groups and storing image data corresponding to the rearranged image groups in said storing means;
means (20) for forming an image on an image bearing member based on the image data stored in said storing means; and
means (42) for selecting one of the first changing means and second changing means.

6. The apparatus according to claim 5, characterized in that said selecting means (42) includes first inputting means (42d) and second inputting means (42e) for energizing each of said first changing means and second changing means.

7. The apparatus according to claim 6, characterized in that said storing means (62) stores the image data divided with said first changing means in a storing area and stores the image data divided with said second changing means in another storing area different from the storing area.

8. An image forming apparatus (2) characterized by comprising:
means (10) for reading information of a document;
means (62) for storing image data read by said reading means;
first changing means (42d) for changing a configuration of the image data, said first changing means dividing the image data read by said reading means into a plurality of sets using a predetermined division method and setting a rearrangement mode for changing an arrangement of the of sets to at least two different arrangements which are distinguishable from each other by codes proper to the arrangements;
second changing means (42e) for changing the configuration of the image data, said second changing means dividing the image data read by said reading means into a plurality of sets has same members corresponds to the sets of said first changing means using a predetermined restoration method, and setting a restoration mode for restoring the arrangement of the sets to an original arrangement of the image data corresponding to the image information of the document with respect to each of said at least two different arrangements obtained in the rearrangement mode;
means (20) for forming an image on an image bearing member based on the image data; and
means (42f) for labeling the image formed by said forming means when the rearrangement mode is set.

9. The apparatus according to claim 8, characterized in that the plurality of sets obtained by said first changing means and the sets obtained by said second changing means are complementary to each other.
